# EUROPEAN PATENT SPECIFICATION

(11) **EP 3 541 042 B1**
(45) Date of publication and mention of the grant of the patent: **23.03.2022**
(21) Application number: 18833376.9
(22) Date of filing: 02.02.2018
(51) Int. Cl.: H04L 29/06, H04L 12/26, H04L 29/08, G06F 21/55

(54) **METHOD AND APPARATUS FOR GENERATING LOG ON BASIS OF PACKET COLLECTION FOR EACH SESSION IN BIG DATA SYSTEM**
PROTOKOLLERSTELLUNGSVERFAHREN UND VORRICHTUNG AUF DER BASIS VON PAKETERFASSUNG PRO SITZUNG IN EINEM GROSSDATENSYSTEM
PROCÉDÉ ET APPAREIL POUR GÉNÉRER UN JOURNAL SUR LA BASE D'UNE COLLECTE DE PAQUETS POUR CHAQUE SESSION DANS UN SYSTÈME DE MÉGADONNÉES

(43) Date of publication of application: 18.09.2019
(73) Proprietor: EASYCERTI INC., Guro-gu, Seoul 08377 (KR)
(72) Inventor: SHIM, Gi Chang, Seoul 07340 (KR); KIM, Dong Rye, Seoul 07054 (KR); KWON, Jung Hyun, Seoul 08307 (KR)
(74) Representative: RGTH
(86) International application number: PCT/KR2018/001463
(87) International publication number: WO 2019/151552

(56) References cited:
- EP-A1- 3 211 852
- KR-A- 20040 106 727
- KR-A- 20180 020 781
- KR-B1- 101 388 627
- KR-B1- 101 419 861
- KR-B1- 101 499 022
- KR-B1- 101 666 791
- US-A1- 2013 080 407
- US-A1- 2015 264 073
- US-A1- 2017 195 353
- ZHAO JINGLING ET AL: "A High-Speed Network Data Acquisition System Based on Big Data Platform", 22017 IEEE INTERNATIONAL CONFERENCE ON COMPUTATIONAL SCIENCE AND ENGINEERING (CSE) AND IEEE INTERNATIONAL CONFERENCE ON EMBEDDED AND UBIQUITOUS COMPUTING (EUC), IEEE, vol. 1, 21 July 2017 (2017-07-21), pages 677-681, XP033139860, DOI: 10.1109/CSE-EUC.2017.128 ISBN: 978-1-5386-3220-8 [retrieved on 2017-08-08]

## Description

### [Technical Field]

The present disclosure relates to a log generating method and apparatus, and more specifically, to a log generating apparatus and method based on per-session packet collection in a big data system.

### [Background Art]

In recent years, the development of IT technology has facilitated the collection and sharing of various information, and the path for the leakage of important internal information of the companies or organization has been diversified. Meanwhile, a corporation or a public institution collects packets exchanged between a client and a server in order to detect an act or symptom of abnormal security (hereinafter referred to as "abnormal symptom") to generate vast amounts of log data, in which the generation of the log data is often limited to simply capturing and recording packets transmitted and received in a network section.

For example, US 2017/195353 relates to methods, systems, and computer readable media for detecting malicious network traffic.

US 2015/264073 discloses a real-time perspective engine that can detect network intrusions by accepting network packets as input, organizing the packets, and processing them through a series of detection schemes to identify potentially malicious network behavior.

EP 3 211 852 relates to a SSH protocol-based session parsing method and system.

Further, US 2013/080407 describes a way for a network operator providing Internet Access to track information, images, and intellectual property which may be sensitive or private which is exchanged with one or more external servers and more efficiently trace who were the senders and receivers.

A paper in IEEE International Conference on Computational Science and Engineering describes a high-speed network data acquisition system based on big data platform with good expansibility and high real-time, aiming at the need of enterprises or organizations to acquire high-speed network data efficiently in network intrusion detection.

For the vast amounts of log data generated in a form of big data, there is a need for a method that can generate logs by matching responses and requests while minimizing the loads on the system since the log generating stage.

### [Disclosure]

### [Technical Problem]

Accordingly, it is an object of the present disclosure to provide a log generating method and apparatus, which generate logs by mapping information extracted from response messages and request messages corresponding to each other, based on a per-session packet collection in a big data system.

### [Technical Solution]

According to an aspect of the present disclosure, there is provided a log generating apparatus based on per-session packet collection, which may include a session management unit including a plurality of packet storage units generated for each session established between a client and a server, a packet distribution unit that receives packets exchanged between a client and a server and distributes the packets to the plurality of packet storage units for each session, and a log generation unit that reassembles request packets and response packets stored in the packet storage units for each session into a request message and a response message, and generating a log by mapping information extracted from the request message and information extracted from the response message.

The session management unit may generate a packet storage unit corresponding to a session each time the session is established between the client and the server.

The session management unit may generate the plurality of packet storage units having a logical structure capable of in-memory scale-out expansion.

The plurality of packet storage units may classify the packets distributed for each session in the packet distribution unit into a request packet and a response packet and store the packets in a stack manner.

When the session management unit determines that both the request packet and the response packet included in the request message and the response message are stored in any of the plurality of packet storage units, the session management unit may provide the request packet and the response packet stored in the predetermined packet storage unit to the log generation unit.

The log generation unit may reassemble the request message and the response message according to protocol of the request packets and the response packets, and extract predetermined information from the reassembled request message and the reassembled response message according to the protocol to generate a log.

According to an aspect of the present disclosure, there is provided a log generating method based on per-session packet collection, which may include generating a packet storage unit for each session established between a client and a server, receiving packets exchanged between the client and the server, distributing the packets for each session, and storing the packets in a corresponding packet storage unit, reassembling request packets and response packets, which are stored for each session in the packet storage unit, into a request message and a response message, and generating a log by mapping information extracted from the request message and information extracted from the response message.

### [Effects of the Invention]

According to the present disclosure, there is an advantage that a log can be generated by mapping a request message and a corresponding response message to each other. In addition, there is an advantage that, since the request packets and the response packets are classified for each session and stored in a stack manner, it is not necessary to separately manage processing such as SYN, ACK, and the like in network communication, and accordingly, high-speed log collection is enabled with the packets.

### [Description of Drawings]

Fig. 1 is a block diagram illustrating a configuration of a log generating apparatus based on per-session packet collection according to an embodiment of the present disclosure.
Fig. 2 is a block diagram showing a configuration of the log generating apparatus of Fig. 1 in more detail.
Fig. 3 is a flowchart illustrating a log generating method based on per-session packet collection according to an embodiment of the present disclosure.

### [Best Mode]

Hereinafter, preferred embodiments of the present disclosure will be described in detail with reference to the accompanying drawings so that those with ordinary knowledge in the art can easily achieve the present disclosure.

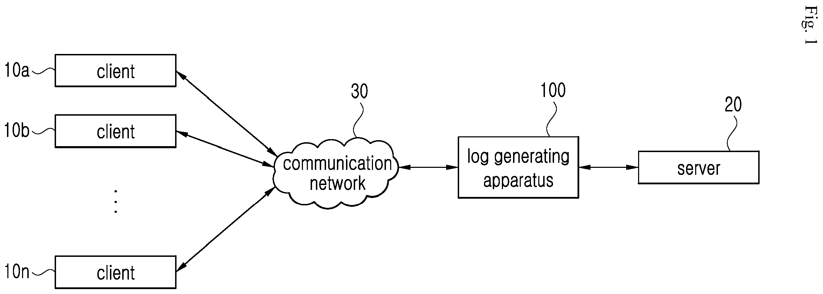

Fig. 1 is a block diagram illustrating a configuration of a log generating apparatus based on per-session packet collection according to an embodiment of the present disclosure.

Referring to Fig. 1, clients 10a, 10b, ..., 10n and the server 20 may exchange request messages and response messages through a communication network 30.

The communication network 30 may be a local area network (LAN), a metropolitan area network (MAN), a wide area network (WAN), the Internet, and the like, without being limited to any specific communication method, and including both wired and wireless communication methods.

The clients 10a, 10b, ..., 10n and the server 20 may establish a session and exchange request packets and response packets based on protocols such as HTTP, FTP, IP, TCP, and DNS.

The log generating apparatus 100 based on per-session packet collection performs a function of collecting packets exchanged through the communication network 30 between the clients 10a, 10b, ..., 10n and the server 20 and generating logs.

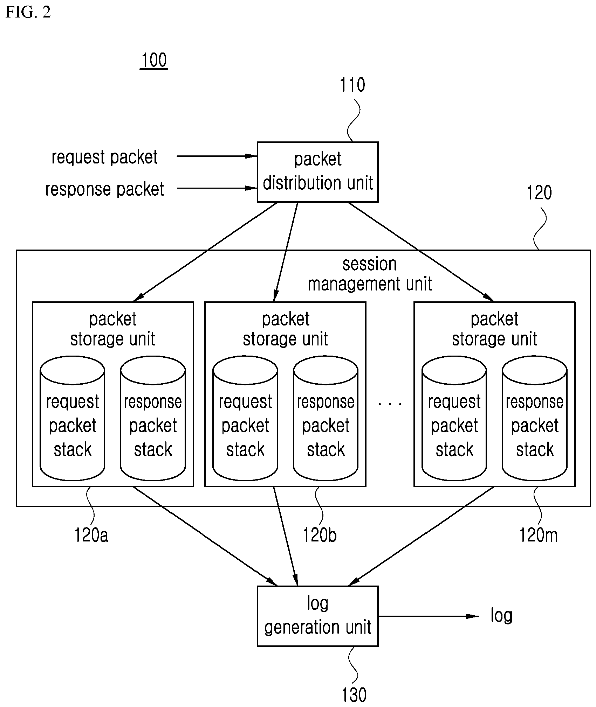

Fig. 2 is a block diagram showing a configuration of the log generating apparatus 100 of Fig. 1 in more detail.

Referring to Fig. 2, the log generation apparatus 100 according to the present disclosure may include a packet distribution unit 110, a session management unit 120, and a log generation unit 130. The session management unit 120 may include a plurality of packet storage units 120a, 120b, ..., 120m.

The packet distribution unit 110 performs a function of receiving packets exchanged between the clients 10a, 10b, ..., 10n and the server 20 and classifying the packets for each session, and distributing the packets into the packet storage units 120a, 120b, ..., 120m corresponding to the session.

The session management unit 120 may generate the packet storage units for each of the sessions established between the clients 10a, 10b, ..., 10n and the server 20. For example, each time a new session is established between the client 10a, 10b, ..., 10n and the server 20, the session management unit 120 may generate a packet storage unit corresponding to the newly established session, which has a logical structure capable of in-memory scale-out expansion. It goes without saying that when there is a terminated session, the session management unit 120 may cancel the packet storage unit of the corresponding session in response to the terminated session.

The session management unit 120 may generate a packet storage unit using a client-side IP:PORT and a server-side IP:PORT of the newly established session as unique keys, and the packet distribution unit 110 may distribute the packets for each session based on a source IP:PORT and a destination IP:PORT of the received packet.

The plurality of packet storage units 120a, 120b, ..., and 120m may classify the packets distributed for each session and transmitted by the packet distribution unit 110 into a request packet and a response packet, and store the packets in a stack manner.

When the session management unit 120 determines that both the request packet included in the request message and the response packet included in the response message are stored in any of the plurality of packet storage units 120a, 120b, ..., 120m, the session management unit 120 may provide the request packet and the response packet stored in that packet storage unit to the log generation unit 130.

For example, when 'session A' is established between the client 10a and the server 20, the session management unit 120 may generate a packet storage unit 120m corresponding to 'session A'. In addition, the request packets of the request message transmitted from the client 10a to the server 20 through the 'session A' are transmitted to the packet storage unit 120m in the order received by the packet distribution unit 110 and then stored. Likewise, when the server 20 transmits the response message to the client 10a through 'session A', the response packets of the response message are transmitted to the packet storage unit 120m in the order received by the packet distribution unit 110 and then stored.

Accordingly, when a new request packet is received after a series of request packets and a series of response packets are received, it may be determined that all packets included in the pair of request message and response message are stored in the packet storage unit 120m. Of course, the above is applicable to when a new request packet is not received. That is, when a new request packet is not received after a certain period of time (for example, 10 seconds or the like) has elapsed after the reception of the last response packet of the corresponding session, it may be determined that all the packets included in the pair of the request message and the response message are stored in the packet storage unit 120m.

The log generation unit 130 performs a function of reassembling the request packets and the response packets stored in the plurality of packet storage units 120a, 120b, ..., 120m for each session into a request message and a response message, and generating a log by mapping information extracted from the request message and information extracted from the response message.

The log generation unit 130 may reassemble the request message and the response message according to the protocol of the request packet and the response packet, and extract predetermined information from the reassembled request message and the response message according to the protocol to generate a log.

Table 1 below illustrates information extracted by the log generation unit 130 according to the protocol for log generation.

**[Table 1]**

| Protocol | Extractable Information |
|---|---|
| HTTP | ^{∗} General Header (Request Header) Item |
| | Date: provides date and time as to when message is made |
| | Via: shows which intermediary (proxy, gateway) this message has passed |
| | ^{∗} Request Header (Request Header) Item |
| | Client-IP: provides IP of the computer on which client is executed |
| | Host: provides host name and port of the server as a target of request |
| | Referrer: provides URL of the document that included current request URI |
| | ^{∗} Response Header (Request Header) Item Server: Name and version of server application |
| IP | ^{∗} IP Header Information |
| | Source IP Address |
| | Destination IP Address |
| TCP or FTP | ^{∗} TCP Header Information |
| | Source port (16 bits): Transmit Port |
| | Destination port (16 bits): Receive Port |
| DNS | ^{∗} Body Information |
| | Domain Name |
| | DNS Question & Answer Data |

While Table 1 exemplifies the information that may be extracted from the request message and the response message for log generation in the log generation unit 130, it is of course possible that other information may be extracted and included in the log.

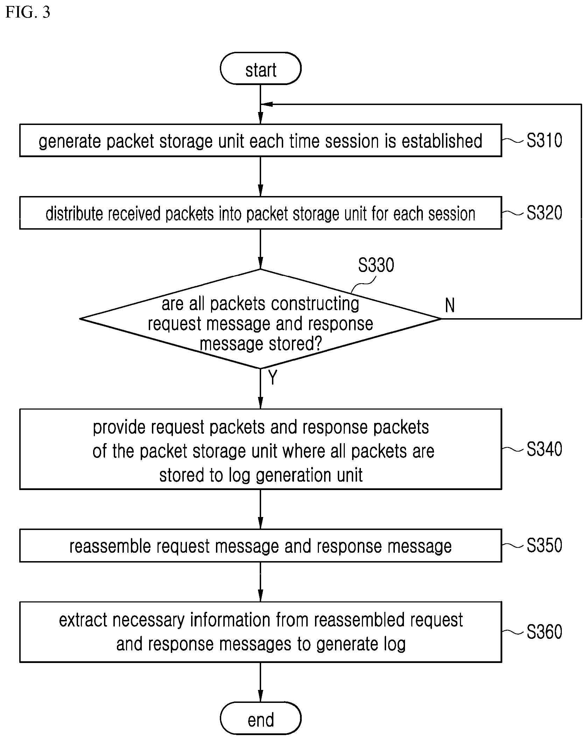

Fig. 3 is a flowchart illustrating a log generating method based on per-session packet collection according to an embodiment of the present disclosure.

Referring to Figs. 1 to 3, the session management unit 120 may respectively generate packet storage units 120a, 120b, ..., 120m for each session established between the clients 10a, 10b, ..., 10n and the server 20, at S310. At S310, the session management unit 120 may generate a packet storage unit corresponding to the newly established session, which has a logical structure capable of in-memory scale-out expansion. It goes without saying that when there is a terminated session, the session management unit 120 may cancel the packet storage unit of the corresponding session in response to the terminated session.

Next, each time the packets exchanged between the clients 10a, 10b, ..., 10n and the server 20 are received, the packet distribution unit 110 may classify the packets for each session and transfer the packets to the corresponding packet storage units 120a, 120b, ..., 120m to be stored therein, at S320. At S320, the packet storage units 120a, 120b, ..., 120m may classify the received packets into the request packets and the response packets, and store the packets in a stack manner.

When a new session is established between the client 10a, 10b, ..., 10n and the server 20 during the execution of the operation of S320, the session management unit 120 may perform the operation of S310.

While performing the operations of S310 and S320, when the session management unit 120 determines that both the request packets included in the request message and the response packets included in the response message are stored in any of the plurality of packet storage units 120a, 120b, ..., 120m at S330-Y, the session management unit 120 may provide the request packets and the response packets stored in that packet storage unit to the log generation unit 130, at S340.

Next, at S350, the log generation unit 130 may reassemble the request packets and the response packets provided from the packet storage units 120a, 120b, ..., 120m into a request message and a response message, and generate a log by mapping information extracted from the request message and information extracted from the response message, at S360.

At S360, the log generation unit 130 may reassemble the request message and the response message according to the protocol of the request packet and the response packet, and extract predetermined information from the reassembled request message and the response message according to the protocol to generate a log.

Embodiments of the present disclosure include a computer-readable medium that includes program instructions for performing various computer-implemented operations. This medium records a program for executing the log generating method based on per-session packet collection described above. The medium may include program instructions, data files, data structures, etc., alone or in combination. Examples of such medium include magnetic medium such as hard disks, floppy disks and magnetic tape, optical recording medium such as CD and DVD, floptical disk and magneto-optical medium, hardware devices configured to store and execute program instructions, such as ROM, RAM, flash memory, etc. In addition, such medium may be a transmission medium, such as optical or metal lines, waveguides, etc., that includes carrier wave that transmits a signal specifying a program command, data structure, or the like. Examples of program instructions include machine language codes such as those generated by a compiler, as well as high-level language codes that may be executed by a computer using an interpreter, and so on.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A log generating apparatus (100) based on per-session packet collection, comprising:
a session management unit (120) including a plurality of packet storage units (120a, 120b, 120m) generated for each session established between a client (10a, 10b, 10n) and a server (20);
a packet distribution unit (110) that is configured to receive packets exchanged between the client (10a, 10b, 10n) and the server (20) and to distribute the packets to the plurality of packet storage units (120a, 120b, 120m) for each session; and
a log generation unit (130) that is configured to reassemble request packets and response packets stored in the packet storage units (120a, 120b, 120m) for each session into a request message and a response message, and to generate a log by mapping information extracted from the request message and information extracted from the response message,
**characterized in**
**that** the session management unit (120) is further configured to generate a packet storage unit (120a, 120b, 120m) corresponding to a session each time the session is established between the client (10a, 10b, 10n) and the server (20),
and
**that** the plurality of packet storage units (120a, 120b, 120m) are configured to classify the packets distributed for each session in the packet distribution unit (110) into a request packet and a response packet and stores the packets in a stack manner.

2. The log generating apparatus of claim 1, wherein the session management unit (120) is configured to generate the plurality of packet storage units (120a, 120b, 120m) having a logical structure capable of in-memory scale-out expansion.

3. The log generating apparatus of claim 1, wherein, when the session management unit (120) is configured to determine that both the request packet and the response packet included in the request message and the response message are stored in any of the plurality of packet storage units (120a, 120b, 120m), the session management unit (120) is configured to provide the request packet and the response packet stored in the predetermined packet storage unit (120a, 120b, 120m) to the log generation unit (130).

4. The log generating apparatus of claim 3, wherein the log generation unit (130) is configured to reassembe the request message and the response message according to protocol of the request packets and the response packets, and to extract predetermined information from the reassembled request message and the reassembled response message according to the protocol to generate a log.

5. A log generating method based on per-session packet collection, comprising:
(S310) generating by a session management unit (120) a packet storage unit (120a, 120b, 120m) for each session established between a client (10a, 10b, 10n) and a server (20);
receiving packets exchanged between the client (10a, 10b, 10n) and the server (20), (S320) distributing the packets for each session, and storing the packets in a corresponding packet storage unit (120a, 120b, 120m);
(S350) reassembling request packets and response packets, which are stored for each session in the corresponding packet storage units (120a, 120b, 120m), into a request message and a response message; and
(S360) generating a log by mapping information extracted from the request message and information extracted from the response message,
**characterized in**
**that** the session management unit (120) generates a packet storage unit (120a, 120b, 120m) corresponding to a session each time the session is established between the client (10a, 10b, 10n) and the server (20),
and
**that** the packet storage units (120a, 120b, 120m) classify the packets distributed for each session into a request packet and a response packet and store the packets in a stack manner.

6. The log generating method of claim 5, wherein the generated packet storage units (120a, 120b, 120m) have a logical structure capable of in-memory scale-out expansion.

7. The log generating method of claim 5, comprising, when (S330) determining that both the request packet and the response packet included in the request message and the response message are stored in the corresponding packet storage unit (120a, 120b, 120m), reassembling the request message and the response message by connecting the request packets and the response packets stored in the corresponding packet storage unit (120a, 120b, 120m) reversely to the order the request message and the response message are stored in the corresponding packet storage unit (120a, 120b, 120m).

8. The log generating method of claim 7, comprising reassembling the request message and the response message according to protocol of the request packets and the response packets, and extracting predetermined information from the reassembled request message and the reassembled response message according to the protocol to generate the log.

## Patentansprüche

1. Protokollerzeugungsvorrichtung (100) basierend auf einer Paketsammlung pro Sitzung, umfassend:
eine Sitzungsverwaltungseinheit (120) einschließlich einer Vielzahl von Paketspeichereinheiten (120a, 120b, 120m), die für jede zwischen einem Client (10a, 10b, 10n) und einem Server (20) eingerichtete Sitzung erzeugt werden;
eine Paketverteilungseinheit (110), die so konfiguriert ist, dass sie zwischen dem Client (10a, 10b, 10n) und dem Server (20) ausgetauschte Pakete empfängt und die Pakete für jede Sitzung an die Vielzahl von Paketspeichereinheiten (120a, 120b, 120m) verteilt; und
eine Protokollerzeugungseinheit (130), die so konfiguriert ist, dass sie Anforderungspakete und Antwortpakete, die in den Paketspeichereinheiten (120a, 120b, 120m) für jede Sitzung gespeichert sind, in eine Anforderungsnachricht und eine Antwortnachricht erneut zusammensetzt und ein Protokoll erzeugt, indem sie aus der Anforderungsnachricht extrahierte Informationen und aus der Antwortnachricht extrahierte Informationen abbildet,
**dadurch gekennzeichnet, dass**
die Sitzungsverwaltungseinheit (120) ferner so konfiguriert ist, dass sie jedes Mal, wenn die Sitzung zwischen dem Client (10a, 10b, 10n) und dem Server (20) eingerichtet wird, eine Paketspeichereinheit (120a, 120b, 120m) entsprechend einer Sitzung erzeugt,
und
dass die Vielzahl von Paketspeichereinheiten (120a, 120b, 120m) so konfiguriert sind, dass sie die Pakete, die für jede Sitzung in der Paketverteilungseinheit (110) verteilt werden, in ein Anforderungspaket und ein Antwortpaket klassifizieren und die Pakete stapelweise speichern.

2. Protokollerzeugungsvorrichtung gemäß Anspruch 1, wobei die Sitzungsverwaltungseinheit (120) so konfiguriert ist, dass sie die Vielzahl von Paketspeichereinheiten (120a, 120b, 120m) erzeugt, die eine logische Struktur aufweisen, die zu einer In-Memory-Scale-Out-Erweiterung fähig ist.

3. Protokollerzeugungsvorrichtung gemäß Anspruch 1, wobei, wenn die Sitzungsverwaltungseinheit (120) so konfiguriert ist, dass sie bestimmt, dass sowohl das Anforderungspaket als auch das Antwortpaket, die in der Anforderungsnachricht und der Antwortnachricht enthalten sind, in irgendeiner der Vielzahl von Paketspeichereinheiten (120a, 120b, 120m) gespeichert werden, die Sitzungsverwaltungseinheit (120) so konfiguriert ist, dass sie das Anforderungspaket und das Antwortpaket, die in der vorbestimmten Paketspeichereinheit (120a, 120b, 120m) gespeichert sind, der Protokollerzeugungseinheit (130) bereitzustellen.

4. Protokollerzeugungsvorrichtung gemäß Anspruch 3, wobei die Protokollerzeugungseinheit (130) so konfiguriert ist, dass sie die Anforderungsnachricht und die Antwortnachricht gemäß einer Vorschrift der Anforderungspakete und der Antwortpakete erneut zusammensetzt und vorbestimmte Informationen aus der erneut zusammengesetzten Anforderungsnachricht und der erneut zusammengesetzten Antwortnachricht gemäß der Vorschriftextrahiert, um ein Protokoll zu erzeugen.

5. Protokollerzeugungsverfahren basierend auf einer Paketsammlung pro Sitzung, umfassend:
(S310) durch eine Sitzungsverwaltungseinheit (120), Erzeugen einer Paketspeichereinheit (120a, 120b, 120m) für jede Sitzung, die zwischen einem Client (10a, 10b, 10n) und einem Server (20) eingerichtet wird;
Empfangen von zwischen dem Client (10a, 10b, 10n) und dem Server (20) ausgetauschten Paketen, (S320) Verteilen der Pakete für jede Sitzung und Speichern der Pakete in einer entsprechenden Paketspeichereinheit (120a, 120b, 120m);
(S350) erneutes Zusammensetzen von Anforderungspaketen und Antwortpaketen, die für jede Sitzung in den entsprechenden Paketspeichereinheiten (120a, 120b, 120m) gespeichert sind, in eine Anforderungsnachricht und eine Antwortnachricht; und
(S360) Erzeugen eines Protokolls durch Abbilden von Informationen, die aus der Anforderungsnachricht extrahiert wurden, und Informationen, die aus der Antwortnachricht extrahiert wurden,
**dadurch gekennzeichnet, dass**
die Sitzungsverwaltungseinheit (120) jedes Mal, wenn die Sitzung zwischen dem Client (10a, 10b, 10n) und dem Server (20) eingerichtet wird, eine Paketspeichereinheit (120a, 120b, 120m) entsprechend einer Sitzung erzeugt, und
dass die Paketspeichereinheiten (120a, 120b, 120m) die für jede Sitzung verteilten Pakete in ein Anforderungspaket und ein Antwortpaket klassifizieren und die Pakete stapelweise speichern.

6. Protokollerzeugungsverfahren gemäß Anspruch 5, wobei die erzeugten Paketspeichereinheiten (120a, 120b, 120m) eine logische Struktur aufweisen, die zu einer In-Memory-Scale-Out-Erweiterung fähig ist.

7. Protokollerzeugungsverfahren gemäß Anspruch 5, umfassend, wenn (S330) bestimmt wird, dass sowohl das Anforderungspaket als auch das Antwortpaket, die in der Anforderungsnachricht und der Antwortnachricht enthalten sind, in der entsprechenden Paketspeichereinheit (120a, 120b, 120m) gespeichert werden, erneutes Zusammensetzen der Anforderungsnachricht und der Antwortnachricht durch Verbinden der Anforderungspakete und der Antwortpakete, die in der entsprechenden Paketspeichereinheit (120a, 120b, 120m) umgekehrt zu der Reihenfolge gespeichert werden, in der die Anforderungsnachricht und die Antwortnachricht in der entsprechenden Paketspeichereinheit (120a, 120b, 120m) gespeichert werden.

8. Protokollerzeugungsverfahren gemäß Anspruch 7, umfassend ein erneutes Zusammensetzen der Anforderungsnachricht und der Antwortnachricht gemäß der Vorschrift der Anforderungspakete und der Antwortpakete und das Extrahieren vorbestimmter Informationen aus der erneut zusammengesetzten Anforderungsnachricht und der erneut zusammengesetzten Antwortnachricht gemäß der Vorschriftll zum Erzeugen des Protokolls.

## Revendications

1. Appareil de génération de journal (100) sur la base d'une collecte de paquets par session, comprenant :
une unité de gestion de session (120) incluant une pluralité d'unités de stockage de paquets (120a, 120b, 120m) générées pour chaque session établie entre un client (10a, 10b, 10n) et un serveur (20) ;
une unité de distribution de paquets (110) qui est configurée pour recevoir des paquets échangés entre le client (10a, 10b, 10n) et le serveur (20) et pour distribuer les paquets à la pluralité d'unités de stockage de paquets (120a, 120b, 120m) pour chaque session ; et
une unité de génération de journal (130) qui est configurée pour réassembler des paquets de demande et des paquets de réponse stockés dans les unités de stockage de paquets (120a, 120b, 120m) pour chaque session dans un message de demande et un message de réponse, et pour générer un journal par le mappage d'informations extraites du message de demande et d'informations extraites du message de réponse,
**caractérisé en ce que**
l'unité de gestion de session (120) est en outre configuré pour générer une unité de stockage de paquets (120a, 120b, 120m) correspondant à une session chaque fois que la session est établie entre le client (10a, 10b, 10n) et le serveur (20),
et
la pluralité d'unités de stockage de paquets (120a, 120b, 120m) sont configurées pour classer les paquets distribués pour chaque session dans l'unité de distribution de paquets (110) en un paquet de demande et un paquet de réponse et stocker les paquets d'une manière empilée.

2. Appareil de génération de journal selon la revendication 1, dans lequel l'unité de gestion de session (120) est configurée pour générer la pluralité d'unités de stockage de paquets (120a, 120b, 120m) ayant une structure logique capable d'une expansion évolutive en mémoire.

3. Appareil de génération de journal selon la revendication 1, dans lequel, lorsque l'unité de gestion de session (120) est configurée pour déterminer que le paquet de demande et le paquet de réponse inclus dans le message de demande et le message de réponse sont stockés dans l'une quelconque de la pluralité d'unités de stockage de paquets (120a, 120b, 120m), l'unité de gestion de session (120) est configurée pour fournir le paquet de demande et le paquet de réponse stockés dans l'unité de stockage de paquets (120a, 120b, 120m) prédéterminée à l'unité de génération de journal (130) .

4. Appareil de génération de journal selon la revendication 3, dans lequel l'unité de génération de journal (130) est configurée pour réassembler le message de demande et le message de réponse en fonction d'un protocole des paquets de demande et des paquets de réponse, et pour extraire des informations prédéterminées du message de demande réassemblé et du message de réponse réassemblé en fonction du protocole pour générer un journal.

5. Procédé de génération de journal sur la base d'une collecte de paquets par session, comprenant :
(S310) la génération, par une unité de gestion de session (120), d'une unité de stockage de paquets (120a, 120b, 120m) pour chaque session établie entre un client (10a, 10b, 10n) et un serveur (20) ;
la réception de paquets échangés entre le client (10a, 10b, 10n) et le serveur (20), (S320) la distribution des paquets pour chaque session, et le stockage des paquets dans une unité de stockage de paquets (120a, 120b, 120m) correspondante ;
(S350) le réassemblage de paquets de demande et de paquets de réponse, qui sont stockés pour chaque session dans les unités de stockage de paquets (120a, 120b, 120m) correspondante, dans un message de demande et un message de réponse ; et
(S360) la génération d'un journal par le mappage d'informations extraites du message de demande et d'informations extraites du message de réponse,
**caractérisé en ce que**
l'unité de gestion de session (120) génère une unité de stockage de paquets (120a, 120b, 120m) correspondant à une session chaque fois que la session est établie entre le client (10a, 10b, 10n) et le serveur (20),
et
les unités de stockage de paquets (120a, 120b, 120m) classent les paquets distribués pour chaque session en un paquet de demande et un paquet de réponse et stockent les paquets d'une manière empilée.

6. Procédé de génération de journal selon la revendication 5, dans lequel les unités de stockage de paquets (120a, 120b, 120m) générées ont une structure logique capable d'une expansion évolutive en mémoire.

7. Procédé de génération de journal selon la revendication 5, comprenant, lors de (S330) la détermination que le paquet de demande et le paquet de réponse inclus dans le message de demande et le message de réponse sont stockés dans l'unité de stockage de paquets (120a, 120b, 120m) correspondante, le réassemblage du message de demande et du message de réponse par la liaison des paquets de demande et des paquets de réponse stockés dans l'unité de stockage de paquets (120a, 120b, 120m) correspondante dans l'ordre inverse de l'ordre dans lequel le message de demande et le message de réponse sont stockés dans l'unité de stockage de paquets (120a, 120b, 120m) correspondante.

8. Procédé de génération de journal selon la revendication 7, comprenant le réassemblage du message de demande et du message de réponse en fonction d'un protocole des paquets de demande et des paquets de réponse, et l'extraction d'informations prédéterminées du message de demande réassemblé et du message de réponse réassemblé en fonction du protocole pour générer le journal.
